(19) Europäisches Patentamt
European Patent Office
Office européen des brevets

(11) **EP 1 975 134 A1**

(12) **EUROPEAN PATENT APPLICATION**
published in accordance with Art. 158(3) EPC

(43) Date of publication:
**01.10.2008 Bulletin 2008/40**

(51) Int Cl.:
***C03C 17/25*** *(2006.01)*

(21) Application number: **07706934.2**

(22) Date of filing: **11.01.2007**

(86) International application number:
**PCT/JP2007/050627**

(87) International publication number:
**WO 2007/081045 (19.07.2007 Gazette 2007/29)**

(84) Designated Contracting States:
**AT BE BG CH CY CZ DE DK EE ES FI FR GB GR HU IE IS IT LI LT LU LV MC NL PL PT RO SE SI SK TR**

(30) Priority: **16.01.2006 JP 2006007956**

(71) Applicant: **Nippon Sheet Glass Company Limited Tokyo 108-6321 (JP)**

(72) Inventors:
• **MUROMACHI, Takashi**
  **Minato-ku, Tokyo, 105-6321 (JP)**

• **OGAWA, Hisashi**
  **Minato-ku, Tokyo,108-6321 (JP)**
• **YOSHIDA, Mamoru**
  **Minato-ku, Tokyo, 108-6321 (JP)**
• **IWAI, Nobuki**
  **Minato-ku, Tokyo, 108-6321 (JP)**

(74) Representative: **HOFFMANN EITLE Patent- und Rechtsanwälte Arabellastrasse 4 81925 München (DE)**

(54) **GLASS PLATE FOR THIN-FILM FORMATION**

(57)    There are provided a glass plate having a thin film formed thereon that can reduce a change in reflection color caused by a change in angle to a glass plate surface on which a thin film is formed, and reduce the change in reflection color even if an uneven thin film having a difference in thickness is formed on the glass plate surface. The glass plate 10 having a thin film formed thereon includes a glass plate 11 having glass plate surfaces (a bottom surface 11a and a top surface 11b) and a thin film (an infrared ray cutting film) 12. The infrared ray cutting film 12 is formed on the top surface 11b of the glass plate 11. A thickness of the infrared ray cutting film 12 is 300 to 3000 nm. A mole ratio of the content of the ITO particles to the content of the silica in the infrared ray cutting film 12 is 0.6:9.4 to 2.3:7.7.

*FIG. 1*

EP 1 975 134 A1

**Description**

Technical Field

The present invention relates to a glass plate having a thin film formed thereon, and more particularly to a glass plate having a thin film formed thereon having a 300 to 3000 nm thick thin film formed on a glass plate surface.

Background Art

In recent years, a thin film formed on a glass plate surface is known containing infrared ray absorbing particles to have a function of cutting off (shielding) infrared rays (for example, see the pamphlet of PCT International Patent Publication No. 2004/011381 and the pamphlet of PCT International Patent Publication No. 2005/095298).
For an infrared ray shielding glass in the pamphlet of PCT International Patent Publication No. 2004/011381, ITO powder containing a fluorine component with high heat resistance is used to allow a sol-gel process to be performed at a high temperature of 350°C or more. The fluorine component is introduced into an infrared ray cutting film while thermally protecting ITO particles.
For an infrared ray shielding glass in the pamphlet of PCT International Patent Publication No. 2005/095298, an infrared ray cutting film containing ITO particles as infrared ray cutting-off components in an organic and inorganic composite film including a combination of organic matter and inorganic oxide is formed on at least one surface of the glass.
The infrared ray cutting films in the pamphlet of PCT International Patent Publication No. 2004/011381 and the pamphlet of PCT International Patent Publication No. 2005/095298 have relatively large thicknesses of 200 nm or more.
If the thin film has a large thickness of 300 nm of more, however, problems in appearance occur such that a reflection color on the side of a glass plate surface on which the thin film is formed changes according to an angle to the glass plate, or even with the same angle to the glass plate, a difference in thickness (for example, 30 nm) of the thin film formed on the glass plate surface causes the change in reflection color.
It is an object of the present invention to provide a glass plate having a thin film formed thereon that can reduce problems in appearance such as a change in reflection color.

Disclosure of the Invention

To attain the above object, in an aspect of the present invention, there is provided a glass plate having a thin film formed thereon having a thin film formed on at least one of glass plate surfaces characterized in that the thin film is a 300 to 3000 nm thick film containing infrared ray cutting particles and silica, and a mole ratio of the content of the infrared ray cutting particles to the content of the silica is 0.6:9.4 to 2.3:7.7.
According to the aspect of the present invention, the thin film is a 300 to 3000 nm thick film containing the infrared ray cutting particles and the silica, and a mole ratio of the content of the infrared ray cutting particles to the content of the silica is 0.6:9.4 to 2.3:7.7. Thus, the refractive index of the thin film for light with wavelength of 550 nm can be 1.48 to 1.57, a change in reflection color caused by a change in angle to the glass plate surface on which the thin film is formed can be reduced, and the change in reflection color can be reduced even if an uneven thin film having a difference in thickness is formed on the glass plate surface.
In the aspect of the present invention, a refractive index of the thin film for light with wavelength of 550 nm can be 1.48 to 1.57.
In the aspect of the present invention, a refractive index of the glass plate surface on which the thin film to be formed for light with wavelength of 550 nm can be 1.50 to 1.55.
According to the aspect of the present invention, the refractive index of the glass plate surface on which the thin film to be formed for light with wavelength of 550 nm is 1.50 to 1.55, thus a difference in refractive index between the thin film and the glass plate surface for light with wavelength of 550 nm can be 0.07 or less.
In the aspect of the present invention, a refractive index of the glass plate surface on which the thin film is to be formed for light with wavelength of 550 nm can be 1.50 to 1.52, and, a refractive index of the thin film for light with wavelength of 550 nm can be 1.48 to 1.54.
According to the aspect of the present invention, the refractive index of the glass plate surface on which the thin film is to be formed for light with wavelength of 550 nm is 1.50 to 1.52, and the refractive index of the thin film for light with wavelength of 550 nm is 1.48 to 1.54, thus a difference in refractive index between the thin film and the glass plate surface for light with wavelength of 550 nm can be 0.04 or less.
In the aspect of the present invention, a refractive index of the glass plate surface on which the thin film to be formed for light with wavelength of 550 nm can be 1.53 to 1.55, and a refractive index of the thin film for light with wavelength of 550 nm can be 1.51 to 1.57.
According to the aspect of the present invention, the refractive index of the glass plate surface on which the thin film is to be formed for light with wavelength of 550 nm is 1.53 to 1.55, and the refractive index of the thin film for light with wavelength of 550 nm is 1.51 to 1.57. Thus the difference in refractive index between the thin film and the glass plate surface for light with wavelength of 550 nm can be 0.04 or less.

In the aspect of the present invention, the infrared ray cutting particles can be indium-containing tin oxide (ITO) particles.

According to the aspect of the present invention, the infrared ray cutting particles are the ITO particles, and thus the refractive index of the thin film can be adjusted with a smaller amount of particles than other infrared ray cutting particles, thereby efficiently increasing infrared ray cutting performance.

In the aspect of the present invention, a difference between a maximum value and a minimum value of reflectance of the glass plate surface on which the thin film is formed for light with wavelengths of 400 to 600 nm can be 2.0% or less.

In the aspect of the present invention, transmittance of the glass plate surface on which the thin film is formed for light with wavelengths of 1000 to 1600 nm can be 30% or less, and transmittance of the glass plate surface on which the thin film is formed for light with wavelengths of 1600 to 2500 nm can be 20% or less.

According to the aspect of the present invention, the transmittance of the glass plate surface on which the thin film is formed for light with wavelengths of 1000 to 1600 nm is 30% or less, and the transmittance of the glass plate surface on which the thin film is formed for light with wavelengths of 1600 to 2500 nm is 20% or less, thereby increasing the infrared ray cutting performance.

Brief Description of the Drawings

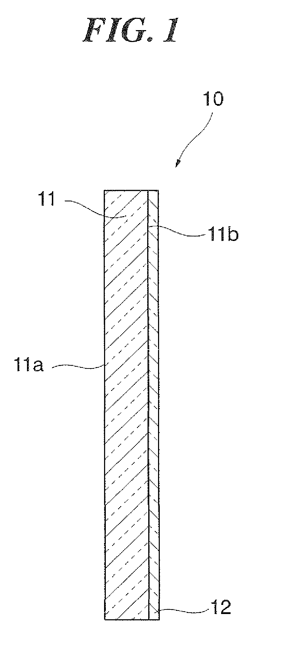

FIG. 1 is a schematic cross sectional view showing the construction of a glass plate having a thin film formed thereon according to an embodiment of the present invention.

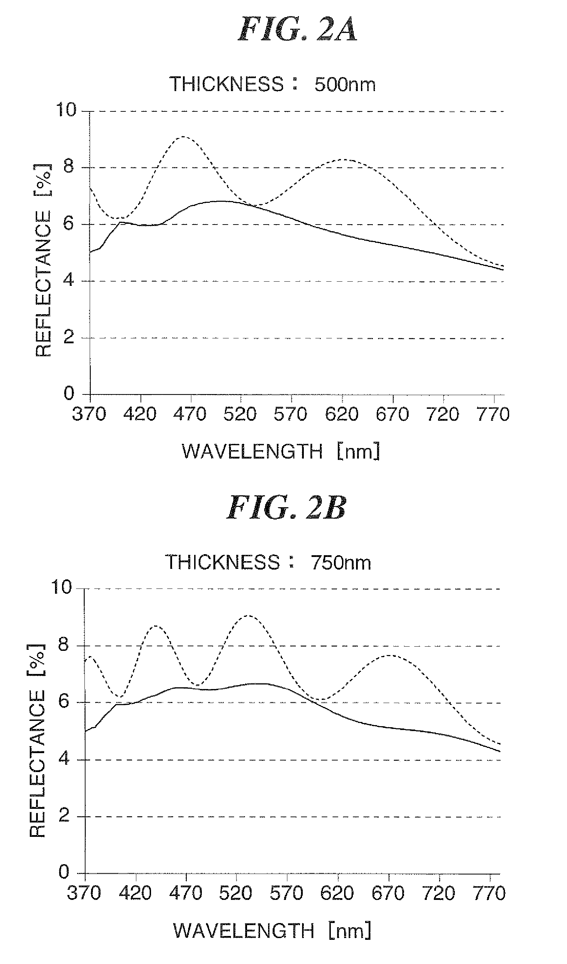

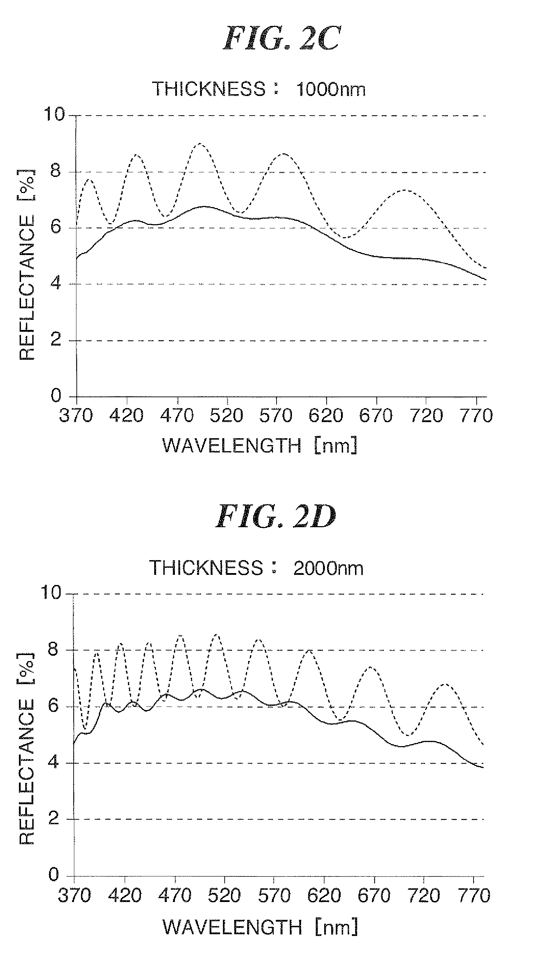

FIGS.2A-2D are graphs showing results of reflectance of a glass plate surface on which an infrared ray cutting film 12 having a difference in refractive index of about 0.01 and 0.10 from the glass plate surface for light with wavelength of 550 nm, FIG.2A shows a case where the thickness of the infrared ray cutting film is about 500 nm, FIG.2B shows a case where the thickness of the infrared ray cutting film is about 750 nm, FIG.2C shows a case where the thickness of the infrared ray cutting film is about 1000 nm, and FIG.2D shows a case where the thickness of the infrared ray cutting film is about 2000 nm. The solid line shows a case where the difference in refractive index is about 0.01, the broken line shows a case where the difference in refractive index is about 0.10, the axis of ordinate shows the reflectance of light, and the axis of abscissas shows the wavelength of light.

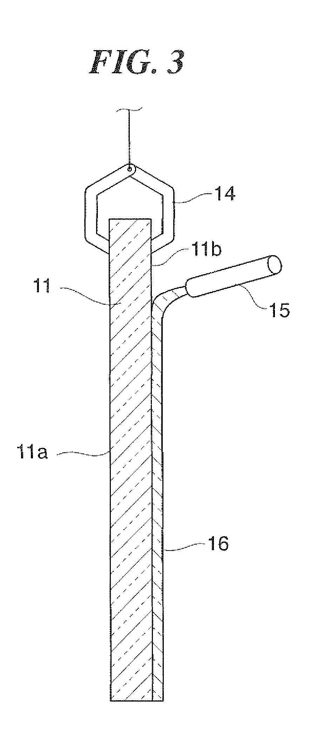

FIG.3 is a view explaining a method of forming the infrared ray cutting film on a top surface of the glass plate in FIG. 1.

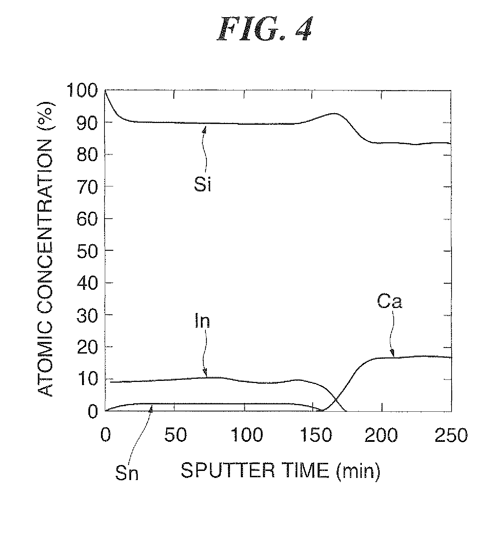

FIG.4 is a graph showing atomic concentrations of indium (In), tin (Sn), and silicon (Si) in Example 1, the axis of ordinate shows an atomic concentration (%), and the axis of abscissas shows sputter time (min).

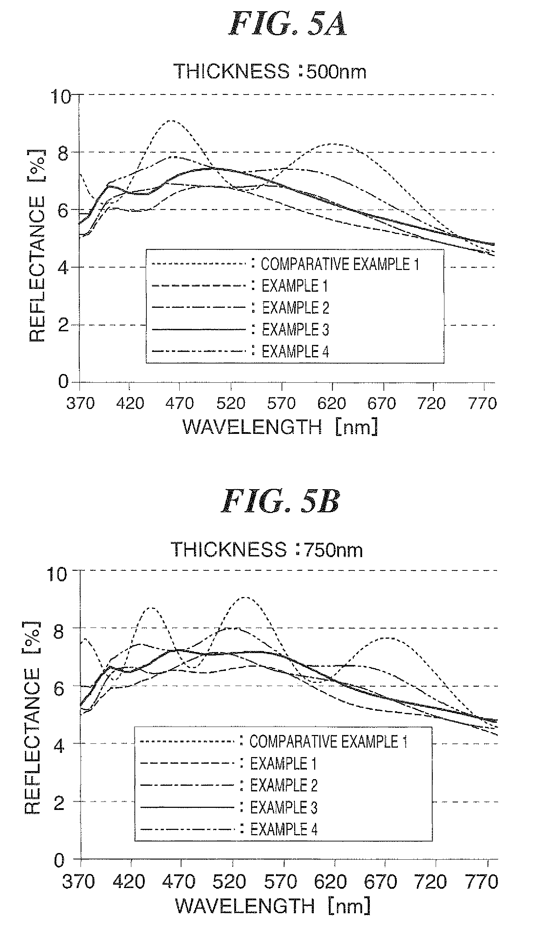

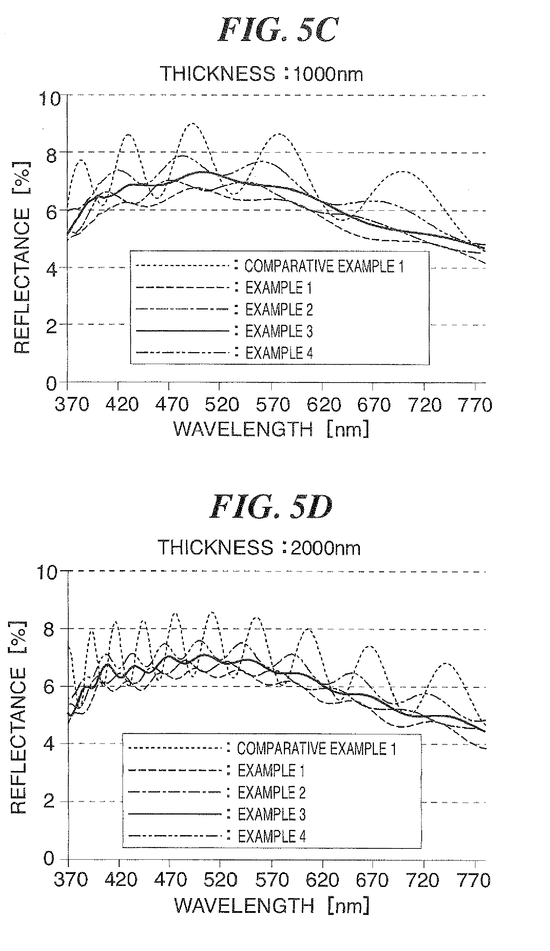

FIGS.5A-5D are graphs showing results of reflectance for light with wavelengths of 370 to 780 nm of a glass plate having a thin film formed thereon in Examples 1 to 4 and Comparative Example 1 being measured, FIG.5A shows a case where the thickness of the infrared ray cutting film is about 500 nm, FIG.5B shows a case where the thickness of the infrared ray cutting film is about 750 nm, FIG.5C shows a case where the thickness of the infrared ray cutting film is about 1000 nm, and FIG.5D shows a case where the thickness of the infrared ray cutting film is about 2000 nm.

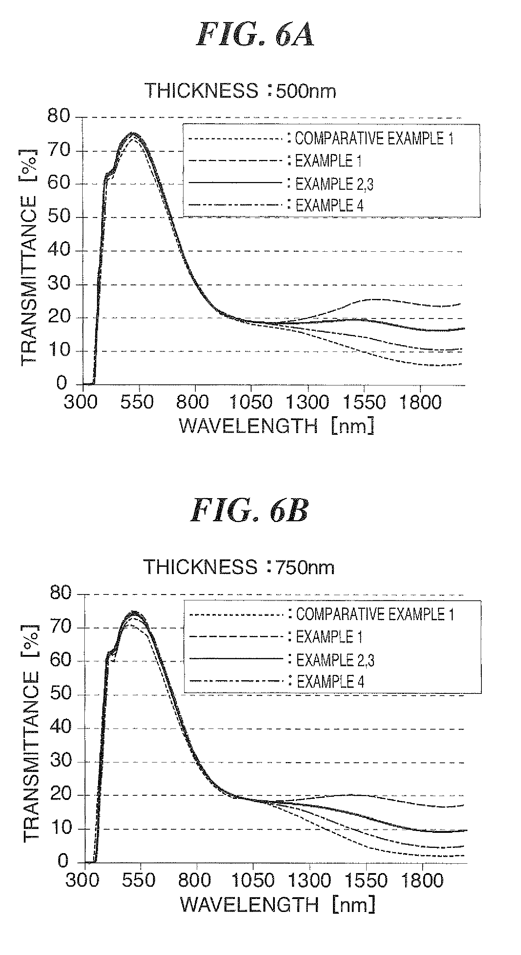

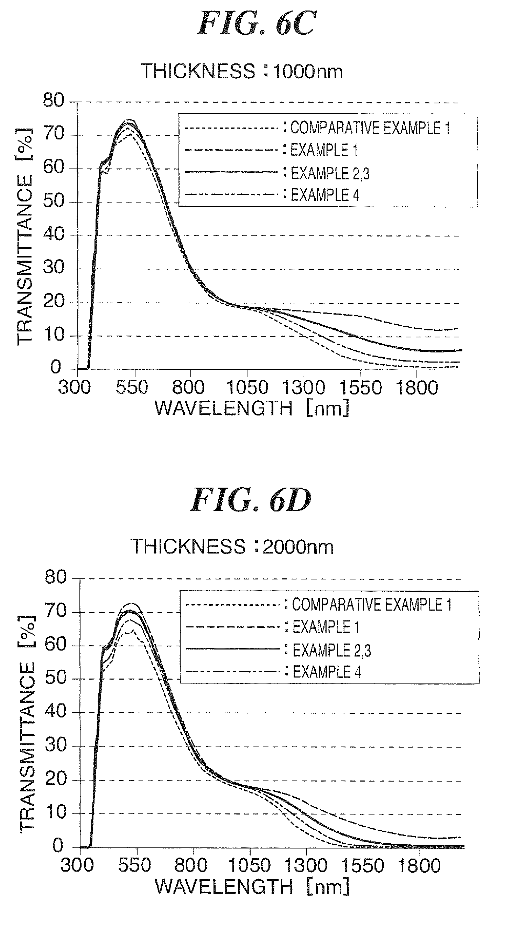

FIGS.6A-6D are graphs showing results of transmittance for light with wavelengths of 300 to 2100 nm of the glass plate having a thin film formed thereon in Examples 1 to 4 and Comparative Example 1 being measured, FIG.6A shows a case where the thickness of the infrared ray cutting film is about 500 nm, FIG.6B shows a case where the thickness of the infrared ray cutting film is about 750 nm, FIG.6C shows a case where the thickness of the infrared ray cutting film 12 is about 1000 nm, and FIG.6D shows a case where the thickness of the infrared ray cutting film 12 is about 2000 nm.

Best Mode for Carrying Out the Invention

The present inventor carried out assiduous studies to achieve the object, and as a result, discovered that in a glass plate having a thin film formed thereon having a thin film formed on at least one of glass plate surfaces, if the thin film is a 300 to 3000 nm thick film containing infrared ray cutting particles and silica, and a mole ratio of the content of the infrared ray cutting particles to the content of the silica is 0.6:9.4 to 2.3:7.7, a refractive index of the thin film for light with wavelength of 550 nm can be 1.48 to 1.57, a change in reflection color caused by a change in angle to the glass plate surface on which the thin film is formed can be reduced, and the change in reflection color can be reduced even if an uneven thin film having a difference in thickness is formed on the glass plate surface.

The present invention has been made based on the result of the above-described study.

FIG. 1 is a schematic cross sectional view showing the construction of a glass plate having a thin film formed thereon according to an embodiment of the present invention.

In FIG. 1, a glass plate 10 having a thin film formed thereon includes a glass plate 11 having glass plate surfaces (a bottom surface 11a and a top surface 11b) and a thin film (an infrared ray cutting film) 12.

In the glass plate 10 having a thin film formed thereon, the infrared ray cutting film 12 is formed on the glass plate surface (the top surface 11b) of the glass plate 11. In FIG. 1, the infrared ray cutting film 12 is formed on the top surface 11b, but not limited to this, the infrared ray cutting film 12 may be formed on the bottom surface 11a according to a refractive index of the infrared ray cutting film 12.

A thickness of the infrared ray cutting film 12 is 300 to 3000 nm. The infrared ray cutting film 12 having the thickness of 300 nm or more can reduce a content of the infrared ray cutting particles in the infrared ray cutting film 12 required for cutting infrared rays, and the infrared ray cutting film 12 having the thickness of 3000 nm or less can increase mechanical properties such as abrasion resistance and prevent occurrence of cracks when the thin film is formed.

The infrared ray cutting film 12 contains indium-containing tin oxide (ITO) particles as infrared ray cutting particles and silica ($SiO_2$).

The ITO particles as the infrared ray cutting particles are dispersed in the infrared ray cutting film 12.

A refractive index of a silica film containing no ITO particles for light with wavelength of 550 nm is about 1.46, and lower than a refractive index of 1.50 to 1.55 of soda-lime-silica glass often used for automobiles for light with wavelength of 550 nm. Thus, the ITO particles are dispersed in the silica film to increase the refractive index of the thin film for light with wavelength of 550 nm to higher than 1.46.

The refractive index n of a thin film which is formed by dispersing ITO particles in silica for light with wavelength of 550 nm is approximately calculated by the following equation:

$$n = (n_x * x + n_y * y)/(x + y)$$

provided that:

n_x: a refractive index of a silica film for light with wavelength of 550 nm (about 1.46)
x: a content of the silica in the thin film (mole ratio)
n_y: a refractive index of a ITO film for light with wavelength of 550 nm (about 2.00 in a case where a mole ratio of a content of indium to a content of tin therein is 9:1)
y: a content of ITO in the thin film (mole ratio)

For example, in the case where the mole ratio of the content of the ITO to the content of the silica in the thin film is 1:9, the refractive index of the thin film for light with wavelength of 550 nm is about 1.51.

The thin film having the refractive index of 1.48 can be obtained when the mole ratio of the content of the silica to the content of the ITO in the thin film is 26:1 ≈ 0.96:0.04.

It has been found that, when comparing the refractive index calculated from the equation described above with the refractive indices of the thin films obtained from the following Examples, all the refractive indices are substantially the same, however, the refractive index calculated from the equation is slightly higher than the refractive indices of the thin films actually obtained.

This is assumed to be due to the effect of the density possessed by the thin films actually obtained, or the effect of other elements contained in the thin films than the ITO and the silica.

Considering these effects, it is assumed that the thin film having a refractive index of 1.48 can be actually obtained when the mole ratio of the content of the silica to the content of the ITO in the thin film is 0.94:0.06.

A mole ratio of the content of the ITO particles to the content of the silica in the infrared ray cutting film 12 is 0.6:9.4 to 2.3:7.7. Thus, a refractive index of the infrared ray cutting film 12 for light with wavelength of 550 nm can be 1.48 to 1.57. The infrared ray cutting film 12 having the refractive index of 1.48 to 1.57 for light with wavelength of 550 nm is formed on a surface of the above-described soda-lime-silica glass having the refractive index of 1.50 to 1.55 for light with wavelength of 550 nm, and thus a difference in refractive index between the infrared ray cutting film 12 and the surface of the soda-lime-silica glass for light with wavelength of 550 nm can be 0.07 or less.

A particle size of an ITO particle is 100 nm or less, preferably 40 nm or less, and more preferably 1 to 40 nm. The particle size of the ITO particle is thus adjusted to increase efficiency in cutting infrared rays and prevent occurrence of haze resulting from particles having large sizes. Also, material such as the ITO particles having high infrared ray cutting performance and the relatively high refractive index for light with wavelength of 550 nm is used as the infrared ray cutting particles to allow the infrared ray cutting film 12 having a relatively low content of the ITO particles to maintain the infrared ray cutting performance, and reduce problems in appearance such that a reflection color on the glass plate surface on which the infrared ray cutting film 12 is formed changes according to an angle to the glass plate 11, or even with the same angle to the glass plate 11, a difference in thickness of the infrared ray cutting film 12 formed on the glass plate surface causes the change in reflection color.

When a glass plate 11 produced by a float method is used, as described above with reference to FIG. 1, the glass plate 11 has a glass plate surface (a bottom surface) 11a containing tin and a glass plate surface (a top surface) 11b substantially containing no tin. Generally, the bottom surface 11a contains tin and thus has a higher refractive index than the top surface 11b substantially containing no tin. Specifically, a refractive index of the top surface 11b for light with wavelength of 550 nm is 1.50 to 1.52, while a refractive index of the bottom surface 11a for light with wavelength of 550 nm is 1.53 to 1.55. Thus, when an infrared ray cutting film 12 having a refractive index of 1.48 to 1.54 (a mole ratio of the content of the ITO particles to the content of the silica in the infrared ray cutting film 12 is 0.6:9.4 to 1.8:8.2) for light with wavelength of 550 nm is formed on the top surface 11b of the glass plate surface, a difference in refractive index between the infrared ray cutting film 12 and the top surface 11b for light with wavelength of 550 nm can be 0.04 or less. On the other hand, when an infrared ray cutting film 12 having a refractive index of 1.51 to 1.57 (a mole ratio of the content of the ITO particles to the content of the silica in the infrared ray cutting film 12 is 1.2:8.8 to 2.3:7.7) for light with wavelength of 550 nm is formed on the bottom surface 11a of the glass plate surface, a difference in refractive index between the infrared ray cutting film 12 and the bottom surface 11a for light with wavelength of 550 nm can be 0.04 or less.

It should be noted that, infrared ray cutting particles are not limited to the ITO particles, but another infrared ray cutting particles having the above mole ratio can be used.

A smaller difference in refractive index between the infrared ray cutting film 12 and the glass plate surface for light with wavelength of 550 nm can more significantly reduce the problems in appearance such that the reflection color on the glass plate surface on which the infrared ray cutting film 12 is formed changes according to the angle to the glass plate 11, or even with the same angle to the glass plate 11, the difference in thickness of the infrared ray cutting film 12 formed on the glass plate surface causes the change in reflection color. Thus, the difference in refractive index between the infrared ray cutting film 12 and the glass plate surface for light with wavelength of 550 nm is preferably smaller, 0.02 or less.

The refractive index for light with wavelength of 550 nm is a representative value of refractive indices in a visible light range because the wavelength of 550 nm is substantially the central wavelength in the visible light range, and the most sensitive wavelength for human eyes.

Now, a relationship will be described between the difference in refractive index between the infrared ray cutting film 12 and the glass plate surface, and the change in reflection color according to the angle to the glass plate 11 and the difference in thickness of the infrared ray cutting film 12.

FIGS. 2A-2D are graphs showing results of reflectance of the glass plate surface on which the infrared ray cutting film 12 having a difference in refractive index of about 0.01 and 0.10 from the glass plate surface for light with wavelength of 550 nm is formed being measured within a wavelength range of 370 to 780 nm, FIG.2A shows a case where the thickness of the infrared ray cutting film 12 is about 500 nm, FIG.2B shows a case where the thickness of the infrared ray cutting film 12 is about 750 nm, FIG.2C shows a case where the thickness of the infrared ray cutting film 12 is about 1000 nm, and FIG.2D shows a case where the thickness of the infrared ray cutting film 12 is about 2000 nm. The solid line shows a case where the difference in refractive index is about 0.01, the broken line shows a case where the difference in refractive index is about 0.10, the axis of ordinate shows the reflectance of light, and the axis of abscissas shows the wavelength of light.

In FIGS. 2A-2D, the infrared ray cutting films 12 having any thicknesses and any differences in refractive index show increase and decrease behaviors that the reflectance for light repeatedly increases and decreases according to a change in wavelength of the light. However, for the infrared ray cutting film 12 having the difference in refractive index of about 0.10 from the glass plate surface for light with wavelength of 550 nm, a variation cycle of the reflectance for light is shorter, and a difference between a maximum value and a minimum value adjacent to the maximum value of the refractive index is larger than those of the infrared ray cutting film 12 having the difference in refractive index of about 0.01 from the glass plate surface for light with wavelength of 550 nm. For the infrared ray cutting film 12 having the large difference in refractive index of about 0.10 from the glass plate surface for light with wavelength of 550 nm, the increase and decrease behavior of the reflectance according to the change in thickness also significantly changes. This means that, for the infrared ray cutting film 12 having the large difference in refractive index of about 0.10 from the glass plate surface for light with wavelength of 550 nm, the reflection color is likely to change according to the change in thickness of the infrared ray cutting film 12.

A larger angle of incident light (incident angle) to a vertical line of the glass plate 11 provides a longer path of light passing through the infrared ray cutting film 12. Thus, a larger incident angle provides optical properties more similar than those when the infrared ray cutting film 12 is thick.

For the infrared ray cutting film 12 having the difference in refractive index of about 0.10 from the glass plate surface for light with wavelength of 550 nm, the reflection color is likely to change according to the change in thickness, and thus the reflection color is likely to change according to the change in angle to the glass plate 11. Thus, the difference between the maximum value and the minimum value of the reflectance for light with wavelengths of 400 to 600 nm of the glass plate surface on which the infrared ray cutting film 12 is formed is preferably 2.0% or less, preferably 1.5% or less, and more preferably 1.0% or less, thereby reducing the problems in appearance such that the reflection color on the glass plate surface on which the infrared ray cutting film 12 is formed changes according to the angle to the glass plate 11, or even with the same angle to the glass plate 11, the difference in thickness (for example, 30 nm) of the infrared ray cutting film 12 formed on the glass plate surface causes the change in reflection color.

In the glass plate 10 having a thin film formed thereon according to the embodiment, other high-performance materials such as an ultraviolet absorber may be added into the infrared ray cutting film 12.

In the glass plate 10 having a thin film formed thereon according to the embodiment, additives such as organic matter may be added into the infrared ray cutting film 12 besides the ITO particles and the silica component. Adding the organic matter can increase dispersibility of the ITO particles, and can prevent occurrence of cracks in the infrared ray cutting film 12 when the infrared ray cutting film 12 is formed by a sol-gel process. The content of the organic matter is not limited, but preferably 60 mass % or less of the total mass of the infrared ray cutting film 12. This is because the content of the organic matter in the infrared ray cutting film 12 in excess of 60 mass % is too high to obtain sufficient hardness of the infrared ray cutting film 12. Further, the content of the organic matter is preferably 15 mass % or less. This is because with the content of the organic matter in excess of 15 mass %, the ratio of the content of the ITO particles to the content of the silica needs to be set in consideration of the presence of the organic matter.

Instead of the ITO particles, antimony-containing tin oxide (ATO), aluminum doped zinc oxide (AZO) particles, indium doped zinc oxide (IZO) particles, tin doped zinc oxide particles, silicon doped zinc oxide particles, 6-lanthanum boride particles, or 6-cerium boride particles may be used.

FIG. 3 is a view explaining a method of forming the infrared ray cutting film 12 on the top surface 11b of the glass plate 11 in FIG. 1.

In FIG. 3, an infrared ray cutting liquid 16 is injected onto the upper part of the glass plate 11 using a nozzle 15 or the like with the glass plate 11 being vertically held by a glass plate holding member 14, and the infrared ray cutting liquid 16 injected onto the upper part of the glass plate 11 vertically flows down to be applied onto the glass plate 11 (flow coating method).

The glass plate 10 having a thin film formed thereon is fabricated by applying the infrared ray cutting liquid 16 onto a surface of a soda-lime-silica glass substrate (600 mm × 600 mm) by the flow coating method under the environment of relative humidity of 30% RH and temperature of 20°C, and then heat-treating at 200 to 600°C. The applying method is not limited to the flow coating, but may be spray coating, dip coating, roll coating, or screen printing.

Examples of the present invention will now be described.

A solution into which polyethylene glycol (PEG 400 produced by Kanto Chemical Co., Inc.):0.036g, pure water: 5.86g, polyether phosphate ester-based surface active agent (Solsperse 41000 produced by Lubrizol Japan Ltd.) as macromolecular dispersant:0.162g, and denatured alcohol (Solmix (registered trademark) AP-7 produced by Japan Alcohol Trading Co., Ltd. (hereinafter referred to as "AP-7"):12.44g are placed in this order was stirred for one minute, then AP-7:3.00g to which 1 mass% of concentrated hydrochloric acid (produced by Kanto Chemical Co., Inc.) was added to the solution and then stirred for one minute.

Then, tetraethoxysilane (KBE-04 produced by Shin-Etsu Chemical Co., Ltd., the content of silica component of 28.8 mass %) was added to the solution and stirred for four hours at room temperature. Then, ITO dispersant obtained by mixing ITO particles and ethanol at a mass ratio of 2:3 and stirring for four hours was added to the solution and stirred for thirty minutes, thereby obtaining the infrared ray cutting liquid 16. As the ITO particle in the ITO dispersant, a particle having a particle size of 10 to 20 nm was used.

As the glass plate 11, a washed 4 mm thick soda-lime-silica glass substrate (green glass having a function of absorbing ultraviolet rays) was used.

The infrared ray cutting liquid 16 was applied to the surface of the glass plate 11 (600 mm × 600 mm) by the flow coating method under the environment of relative humidity of 30% RH and temperature of 20°C.

Examples 1 to 4 in which a mole ratio of the content of ITO to the content of silica is adjusted to 1:9 to 2.3:7.7, and Comparative Example 1 in which a mole ratio of the content of ITO to the content of silica is adjusted to 3.1:6.9 will now be described.

The ratio of the content of the ITO to the content of the silica is obtained by detecting photoelectron intensities of indium (In), tin (Sn), and silicon (Si), and calculating an atomic concentration percentage of an atomic concentration ratio (In+Sn:Si) of the sum of the indium (In) and the tin (Sn) to the silicon (Si) using the detected photoelectron intensities and relative sensitivity coefficient in a device used.

The analysis method is as described below.

As a pretreatment, a sample is cut and then secured to a sample stage using a molybdenum mask. Then, a composition analysis in a depth direction by X-ray photoelectron spectroscopy analysis was performed with an analysis device and on an analysis condition and an etching condition described below.

As the analysis device, an X-ray photoelectron spectroscopy analysis device ESCA-5600ci produced by ULVAC-PHI, INC. was used.

For the analysis condition, a monochromated X-ray source (Al monochromated 2 mm filament) was used as an X-ray source (current X-ray anode), anode energy was set to 2.3828 J (1486.6 eV), electric energy (anode power) was set to 150 W, a voltage (X-ray voltage) was set to 14 kV, and a take-off angle (stage angle) was set to 45°.

For the etching condition, operated as an etching method was sputtering by Ar ion, an acceleration voltage (beam voltage) was set to 3.0 kV, raster was set to $4 \times 4$ mm, and a sputter rate (etching rate) was set to about 1.9 nm/min (a reduced value of $SiO_2$ film).

Composition, specifically the content of ITO and silica, in the infrared ray cutting film is calculated based on the result of the composition analysis in the depth direction by X-ray photoelectron spectroscopy analysis, and the composition (the content amount) is expressed as each component in the infrared ray cutting film around the center in the depth direction.

As Example 1, 2.25 g ITO dispersant and 6.25 g tetraethoxysilane were added to prepare an infrared ray cutting liquid with a mass ratio of the content of ITO to the content of silica of 3.3:6.7 and its mole ratio of 1:9, and the infrared ray cutting liquid was applied to a top surface of a glass plate to prepare a glass plate having a thin film formed thereon on which an infrared ray cutting film was formed.

FIG. 4 is a graph showing atomic concentrations of indium (In), tin (Sn), and silicon (Si) in Example 1, the axis of ordinate shows an atomic concentration (%), and the axis of abscissas shows sputter time (min).

In FIG. 4, an atomic concentration ratio (In+Sn:Si) of the sum of the indium (In) and the tin (Sn) to the silicon (Si) is about 1:9, and thus a mole ratio of the content of the ITO to the content of the silica is found to be about 1:9.

In Example 2, 3.07 g ITO dispersant and 5.13 g tetraethoxysilane were added to prepare an infrared ray cutting liquid with a mass ratio of the content of ITO to the content of silica of 4.5:5.5 and its mole ratio of 1.6:8.4, and the infrared ray cutting liquid was applied to a top surface of a glass plate to prepare a glass plate having a thin film formed thereon on which an infrared ray cutting film was formed.

In Example 3, 3.07 g ITO dispersant and 5.13 g tetraethoxysilane were added to prepare an infrared ray cutting liquid with a mass ratio of the content of ITO to the content of silica of 4.5:5.5 and its mole ratio of 1.6:8.4, and the infrared ray cutting liquid was applied to a bottom surface of a glass plate to prepare a glass plate having a thin film formed thereon on which an infrared ray cutting film was formed.

In Example 4, 3.89 g ITO dispersant and 4.01 g tetraethoxysilane were added to prepare an infrared ray cutting liquid with a mass ratio of the content of ITO to the content of silica of 5.7:4.3 and its mole ratio of 2.3:7.7, and the infrared ray cutting liquid was applied to a bottom surface of a glass plate to prepare a glass plate having a thin film formed thereon on which an infrared ray cutting film was formed.

In Comparative Example 1, 4.50 g ITO dispersant and 3.17 g tetraethoxysilane were added to prepare an infrared ray cutting liquid with a mass ratio of the content of ITO to the content of silica of 6.6:3.4 and its mole ratio of 3.1:6.9, and the infrared ray cutting liquid was applied to a top surface of a glass plate to prepare a glass plate having a thin film formed thereon on which an infrared ray cutting film was formed.

For Examples 1 to 4 and Comparative Example 1, a refractive index of the infrared ray cutting film for light with wavelength of 550 nm was measured using a spectroscopic ellipsometer (VASE produced by J.A. Woollam Co., Inc.), a refractive index of a glass plate surface for light with wavelength of 550 nm was calculated from transmittance and reflectance measured using a spectrophotometer (spectrophotometer U-4000 produced by Hitachi Ltd.), and the degree of interference of light was observed. The refractive index of the infrared ray cutting film for light with wavelength of 550 nm was evaluated by ellipsometric analysis method (spectroscopic ellipsometry) of optimizing an optical model parameter so as to recreate $Psi(\psi)$ and $Delta(\Delta)$ obtained by the spectroscopic ellipsometer, and calculating an optical constant (refractive index, and attenuation coefficient). The results of the refractive index of the glass plate surface for light with wavelength of 550 nm, the refractive index of the infrared ray cutting film for light with wavelength of 550 nm, the difference in refractive index between the infrared ray cutting film and the glass plate surface for light with wavelength of 550 nm, and the degree of interference of light are shown in Table 1.

For the glass plate having a thin film formed thereon in each Example, reflectance for light with wavelengths of 370 to 780 nm and transmittance for light with wavelengths of 300 to 2100 nm of the glass plate surface on the side on which the infrared ray cutting films are formed having the thicknesses of about 500 nm, about 750 nm, about 1000 nm, and about 2000 nm were measured using a spectrophotometer (spectrophotometer U-4000 produced by Hitachi Ltd.). The measurement results are shown in FIGS. 5A-5D and 6A-6D. The thickness of the infrared ray cutting film on the glass plate having a thin film formed thereon in each Example was measured by cutting the glass plate, and observing a section of the infrared ray cutting film formed on the glass plate surface of the cut glass plate using a field emission type scanning electron microscope (SEM) (Model No. S-4700 produced by Hitachi Ltd.). For this thickness measurement, a measurement sample was coated with a Pt-Pd film for conducting. For a measurement condition, the acceleration voltage was 5 kV. After the thickness was measured by the above-described method, optical properties of the glass plate having a thin film formed thereon near sample positions with the above-described thicknesses (about 500 nm, about 750 nm, about 1000 nm, and about 2000 nm) were measured by the spectrophotometer.

A maximum value and a minimum value of the reflectance for light with wavelengths of 400 to 600 nm of the glass plate surface on which the infrared ray cutting film having each thickness is formed and a difference between the maximum value and the minimum value are shown in Table 2. The reflectance of an incident light with an incident angle of 12° was measured.

[Table 1]

| | The additive amount of ITO dispersant (g) | The additive amount of tetra- ethoxy- silane (g) | Mass ratio of the content of ITO to the content of silica | Mole ratio of the content of ITO to the content of silica | Infrared ray cutting film formed surface | Refractive Index of glass plate surface for light with wavelength of 550 nm | Refractive Index of infrared ray cutting film for light with wavelength of 550 nm | Difference in refractive index between infrared ray cutting film and glass plate surface for light with wavelength of 550 nm | Interference of light |
|---|---|---|---|---|---|---|---|---|---|
| Example 1 | 2.25 | 6.25 | 3.3:6.7 | 1 :9 | Top surface | 1.51 | 1.50 | 0.01 | Little |
| Example 2 | 3.07 | 5.13 | 4.5:5.5 | 1.6:8.4 | Top surface | 1.51 | 1.53 | 0.02 | Weak |
| Example 3 | 3.07 | 5.13 | 4.5:5.5 | 1.6:8.4 | Bottom surface | 1.54 | 1.53 | 0.01 | Weak |
| Example 4 | 3.89 | 4.01 | 5.7:4.3 | 2.3:7.7 | Bottom surface | 1.54 | 1.57 | 0.03 | Weak |
| Comparative Example 1 | 4.50 | 3.17 | 6.6:3.4 | 3.1:6.9 | Top surface | 1.51 | 1.61 | 0.10 | Weak |

[Table 2]

| | 500 nm thick | | | 750 nm thick | | | 1000 nm thick | | | 2000 nm thick | | |
|---|---|---|---|---|---|---|---|---|---|---|---|---|
| | reflectance (%) | | | reflectance (%) | | | reflectance (%) | | | reflectance (%) | | |
| | Maximum value | Minimum value | Difference | Maximum value | Minimum value | Difference | Maximum value | Minimum value | Difference | Maximum value | Minimum value | Difference |
| Example 1 | 6.83 | 5.87 | 0.96 | 6.69 | 5.92 | 0.77 | 6.75 | 5.85 | 0.90 | 6.62 | 5.82 | 0.80 |
| Example 2 | 6.92 | 6.33 | 0.59 | 7.17 | 6.30 | 0.87 | 7.02 | 6.14 | 0.88 | 6.88 | 6.00 | 0.88 |
| Example 3 | 7.42 | 6.46 | 0.96 | 7.22 | 6.47 | 0.75 | 7.30 | 6.42 | 0.88 | 7.07 | 6.27 | 0.80 |
| Example 4 | 7.83 | 6.94 | 0.89 | 7.99 | 6.69 | 1.30 | 7.87 | 6.77 | 1.10 | 7.59 | 6.61 | 0.98 |
| Comparative Example 1 | 9.09 | 6.24 | 2.85 | 9.07 | 6.12 | 2.95 | 9.00 | 6.15 | 2.85 | 8.57 | 5.98 | 2.59 |

From Table 1, as in Examples 1 to 4, it was found that adjusting the mole ratio of the content of the ITO to the content of the silica in the infrared ray cutting film to 1:9 to 2.3:7.7 can reduce the difference in refractive index between the infrared ray cutting film and the glass plate surface for light with wavelength of 550 nm.

From Table 2, as in Examples 1 to 4, it was found that adjusting the mole ratio of the content of the ITO to the content of the silica in the infrared ray cutting film to 1:9 to 2.3:7.7 can reduce the difference between the maximum value and the minimum value of the reflectance for light with the wavelength of 400 to 600 nm of the glass plate surface on which the infrared ray cutting film is formed to 1.5% or less.

**Claims**

1. A glass plate having a thin film formed thereon having a thin film formed on at least one of glass plate surfaces, **characterized in that** said thin film is a 300 to 3000 nm thick film containing infrared ray cutting particles and silica, and a mole ratio of the content of the infrared ray cutting particles to the content of the silica is 0.6:9.4 to 2.3:7.7.

2. The glass plate having a thin film formed thereon as claimed in claim 1, **characterized in that** a refractive index of said thin film for light with wavelength of 550 nm is 1.48 to 1.57.

3. The glass plate having a thin film formed thereon as claimed in claim 1, **characterized in that** a refractive index of the glass plate surface on which said thin film is to be formed for light with wavelength of 550 nm is 1.50 to 1.55.

4. The glass plate having a thin film formed thereon as claimed in claim 3, **characterized in that** the refractive index of the glass plate surface on which said thin film is to be formed for light with wavelength of 550 nm is 1.50 to 1.52, and the refractive index of said thin film for light with wavelength of 550 nm is 1.48 to 1.54.

5. The glass plate having a thin film formed thereon as claimed in claim 3, **characterized in that** the refractive index of the glass plate surface on which said thin film is to be formed for light with wavelength of 550 nm is 1.53 to 1.55, and the refractive index of said thin film for light with wavelength of 550 nm is 1.51 to 1.57.

6. The glass plate having a thin film formed thereon as claimed in claim 1, **characterized in that** said infrared ray cutting particles are indium-containing tin oxide (ITO) particles.

7. The glass plate having a thin film formed thereon as claimed in claim 1, **characterized in that** a difference between a maximum value and a minimum value of reflectance of the glass plate surface on which said thin film is formed for light with wavelengths of 400 to 600 nm is 2.0% or less.

8. The glass plate having a thin film formed thereon as claimed in claim 1, **characterized in that** transmittance of the glass plate surface on which said thin film is formed for light with wavelengths of 1000 to 1600 nm is 30% or less, and transmittance of the glass plate surface on which said thin film is formed for light with wavelengths of 1600 to 2500 nm is 20% or less.

## FIG. 1

# FIG. 2A

THICKNESS： 500nm

# FIG. 2B

THICKNESS： 750nm

## FIG. 2C

THICKNESS : 1000nm

## FIG. 2D

THICKNESS : 2000nm

# FIG. 3

*FIG. 4*

## *FIG. 5A*

### THICKNESS : 500nm

## *FIG. 5B*

### THICKNESS : 750nm

## FIG. 5C

### THICKNESS : 1000nm

## FIG. 5D

### THICKNESS : 2000nm

# FIG. 6A

THICKNESS : 500nm

# FIG. 6B

THICKNESS : 750nm

## *FIG. 6C*

### THICKNESS : 1000nm

## *FIG. 6D*

### THICKNESS : 2000nm

**EP 1 975 134 A1**

| INTERNATIONAL SEARCH REPORT | International application No. |
|---|---|
| | PCT/JP2007/050627 |

A. CLASSIFICATION OF SUBJECT MATTER
*C03C17/25*(2006.01)i

According to International Patent Classification (IPC) or to both national classification and IPC

B. FIELDS SEARCHED

Minimum documentation searched (classification system followed by classification symbols)
C03C17/25

Documentation searched other than minimum documentation to the extent that such documents are included in the fields searched
Jitsuyo Shinan Koho          1922-1996     Jitsuyo Shinan Toroku Koho     1996-2007
Kokai Jitsuyo Shinan Koho     1971-2007     Toroku Jitsuyo Shinan Koho     1994-2007

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 2004-338985 A  (Nippon Sheet Glass Co., Ltd.),<br>02 December, 2004 (02.12.04),<br>Claims 1, 5 to 8; Par. Nos. [0013], [0019], [0028], [0029]<br>(Family: none) | 1,2,6,8<br>3-5,7 |
| X<br>Y | JP 2005-22941 A  (Asahi Glass Co., Ltd.),<br>27 January, 2005 (27.01.05),<br>Claims 1, 4, 6, 7; Par. Nos. [0031] to [0035], [0037] to [0043]<br>(Family: none) | 1,2,6,8<br>3-5,7 |

| ☒  Further documents are listed in the continuation of Box C. | ☐  See patent family annex. |
|---|---|

\*     Special categories of cited documents:
"A"   document defining the general state of the art which is not considered   to be of particular relevance
"E"   earlier application or patent but published on or after the international filing date
"L"   document which may throw doubts on priority claim(s) or which is cited to establish the publication date of another citation or other special reason (as specified)
"O"   document referring to an oral disclosure, use, exhibition or other means
"P"   document published prior to the international filing date but later than the priority date claimed

"T"   later document published after the international filing date or priority date and not in conflict with the application but cited to understand the principle or theory underlying the invention
"X"   document of particular relevance; the claimed invention cannot be considered novel or cannot be considered to involve an inventive step when the document is taken alone
"Y"   document of particular relevance; the claimed invention cannot be considered to involve an inventive step when the document is combined with one or more other such documents, such combination being obvious to a person skilled in the art
"&"   document member of the same patent family

| Date of the actual completion of the international search<br>    19 February, 2007 (19.02.07) | Date of mailing of the international search report<br>    27 February, 2007 (27.02.07) |
|---|---|
| Name and mailing address of the ISA/<br>    Japanese Patent Office | Authorized officer |
| Facsimile No. | Telephone No. |

Form PCT/ISA/210 (second sheet) (April 2005)

**INTERNATIONAL SEARCH REPORT**

| International application No. |
|---|
| PCT/JP2007/050627 |

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 9-235141 A  (Nippon Sheet Glass Co., Ltd.), 09 September, 1997 (09.09.97), Par. Nos. [0001], [0016] & WO 97/23424 A1        & US 5876854 A & EP 0811583 A1 | 3-5,7 |
| A | JP 2004-338986 A  (Nippon Sheet Glass Co., Ltd.), 02 December, 2004 (02.12.04), Claim 2; Par. No. [0018]; table 1-3 (Family: none) | 1-8 |

Form PCT/ISA/210 (continuation of second sheet) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2004011381 W

- WO 2005095298 W